(19) Europäisches Patentamt
European Patent Office
Office européen des brevets

(11) **EP 1 592 149 B1**

(12) **FASCICULE DE BREVET EUROPEEN**

(45) Date de publication et mention
de la délivrance du brevet:
**26.08.2009 Bulletin 2009/35**

(51) Int Cl.:
***H04B 7/08*** *(2006.01)*

(21) Numéro de dépôt: **05008580.2**

(22) Date de dépôt: **20.04.2005**

(54) **Procédé de traîtement de signal et récepteur de radiocommunication numérique associé**

Signalverarbeitungsverfahren und entsprechender digitaler Radiokommunikations Empfänger

Method of signal processing and associated receiver for digital radiocommunication

(84) Etats contractants désignés:
**DE FR GB**

(30) Priorité: **26.04.2004 FR 0404392**

(43) Date de publication de la demande:
**02.11.2005 Bulletin 2005/44**

(73) Titulaire: **Nortel Networks Limited**
**St Laurent, Québec H4S 2A9 (CA)**

(72) Inventeurs:
• **Lucidarme, Thierry**
**78180 Montigny le Bretonneux (FR)**
• **Ben Rached, Nidham**
**75017 Paris (FR)**

(74) Mandataire: **Bird, William Edward et al**
**Bird Goën & Co.**
**Klein Dalenstraat 42A**
**3020 Winksele (BE)**

(56) Documents cités:
**FR-A- 2 796 227        US-B1- 6 240 386**

• **GHAREEB I ET AL: "Performance evaluation of QDPSK over nakagami fading channels with diversity reception" 18 septembre 2000 (2000-09-18), , PAGE(S) 246-250 , XP010520640 * le document en entier ***

**Description**

La présente invention concerne le traitement de signaux radio par un récepteur de radiocommunication. Elle concerne plus particulièrement l'estimation, par un récepteur de radiocommunication, de symboles portés par de tels signaux radio.

Dans un système de radiocommunication, des signaux radio portant des symboles d'information sont transmis sur des canaux de propagation. Un récepteur du système de radiocommunication, à l'écoute de tels canaux de propagation, reçoit ces signaux et les analyse de manière à retrouver l'information qu'ils portent.

Toutefois, l'information reçue au niveau du récepteur peut largement différer de celle qui a été émise, du fait que les canaux de propagation sur lesquels les signaux sont transmis sont sujets à des perturbations. En particulier, les canaux de propagation sont affectés par du bruit constitué notamment par du bruit thermique mais aussi par l'interférence créée par l'utilisation d'autres canaux de propagation.

Pour détecter l'information réellement émise, le récepteur de radiocommunication doit donc effectuer un traitement de chaque signal reçu. Ce traitement est généralement basé sur certaines hypothèses concernant le bruit, comme par exemple selon le document FR-A-2 796 229. Une hypothèse courante est de considérer le bruit affectant un canal de propagation comme un bruit blanc gaussien, c'est-à-dire dont la distribution énergétique a pour densité de probabilité une gaussienne centrée.

Cette hypothèse est bien adaptée dans certains cas, notamment dans celui où un nombre élevé de sources d'interférences, encore appelés, interféreurs, est à l'origine du bruit affectant le ou les canaux de propagation considérés. En revanche, elle reste relativement approximative et elle est même inadaptée dans le cas où le bruit est généré à partir de la contribution d'un nombre restreint d'interféreurs. En particulier, lorsqu'un interféreur, lié à l'utilisation d'un autre canal de propagation, contribue de façon prépondérante au bruit, ce dernier ne peut plus être assimilé à un bruit blanc gaussien sous peine de limiter fortement l'efficacité de la détection au niveau du récepteur.

Plus généralement, la prise en compte d'hypothèses a priori sur le bruit reçue peut nuire à la qualité de la détection dans certains cas.

Un but de la présente invention est de limiter les inconvénients ci-dessus, pour améliorer la qualité de la détection par un récepteur de radiocommunication.

Un autre but de la présente invention est de mieux caractériser le bruit affectant des canaux de propagation, en particulier dans le cas où ce bruit est issu d'un nombre limité de contributions prépondérantes.

L'invention propose ainsi un procédé de traitement de signal pour un récepteur de radiocommunication numérique, comprenant les étapes suivantes, relativement à au moins un canal de propagation affecté par du bruit :

- calculer des estimations successives dudit bruit ;

- choisir un modèle statistique parmi une pluralité de modèles statistiques, pour décrire une distribution statistique du bruit en fonction des estimations successives calculées dudit bruit ;

- détecter des paramètres relatifs à ladite distribution statistique, en fonction du modèle statistique choisi : et

- calculer une estimation d'au moins un symbole porté par un signal radio reçu sur ledit canal de propagation, en tenant compte des paramètres détectés relatifs à ladite distribution statistique.

Ce procédé permet ainsi une meilleure prise en compte du bruit affectant les canaux de propagation considérés, grâce à une analyse de ce bruit. Il aboutit donc à une estimation plus fiable des symboles transmis, par rapport à celle effectuée dans les récepteurs classiques où l'hypothèse est faite que le bruit est blanc gaussien.

La distribution statistique du bruit est avantageusement une densité de probabilité relative aux estimations successives du bruit, les estimations du bruit pouvant être calculées à partir de mesures d'énergie effectuées sur des informations transmises à puissance prédéterminée sur ledit canal de propagation.

Le modèle statistique choisi parmi la pluralité de modèles peut par exemple être une somme d'au moins deux gaussiennes. Il est alors relativement adapté aux cas où le bruit est issu d'un interféreur prépondérant ou d'un groupe restreint d'interféreurs prépondérants.

Le modèle statistique choisi peut également être une gaussienne, ce qui est notamment bien adapté aux cas où le bruit résulte de contributions d'interféreurs multiples, dont aucun ne prédomine véritablement. Dans ce cas, on se ramène à une détection classique de symboles, à la différence toutefois qu'aucune hypothèse préalable n'est faite sur le bruit affectant les canaux de propagation considérés dans le cadre de l'invention. Un changement de nature du bruit, par exemple par l'ajout ou le retrait de la contribution d'un interféreur donné, peut impliquer une modification du critère de décision.

De façon avantageuse, les paramètres relatifs à la distribution statistique comprennent, pour chaque gaussienne du modèle statistique choisi, au moins l'un parmi : une valeur autour de laquelle ladite gaussienne est sensiblement centrée et une variance.

Dans un mode de réalisation particulier de l'invention, l'analyse du bruit et sa prise en compte dans la détection de symboles est optionnelle et dépend du nombre d'interféreurs dont la contribution est prépondérante dans le bruit affectant les canaux de propagation considérés. Si l'on dispose également de moyens de détection classiques, basés sur l'hypothèse d'un bruit blanc gaussien, ceux-ci peuvent être mis en oeuvre en complément des moyens susmentionnés pour calculer des estimations de symboles lorsqu'une analyse plus fine du bruit n'apporterait pas d'avantage significatif, notamment dans le cas d'un nombre élevé d'interféreurs contribuant la formation du bruit.

L'invention propose également un récepteur de radiocommunication numérique, comprenant, relativement à au moins un canal de propagation affecté par du bruit :

- des moyens pour calculer des estimations successives dudit bruit ;

- des moyens pour choisir un modèle statistique parmi une pluralité de modèles statistiques, pour décrire une distribution statistique du bruit en fonction des estimations successives calculées dudit bruit ;

- des moyens pour détecter des paramètres relatifs à ladite distribution statistique, en fonction du modèle statistique choisi ; et

- des moyens pour calculer une estimation d'au moins un symbole porté par un signal radio reçu sur ledit canal de propagation, en tenant compte des paramètres détectés relatifs à ladite distribution statistique.

L'invention propose en outre un produit programme d'ordinateur à installer dans un récepteur de radiocommunication numérique, comprenant des instructions pour mettre en oeuvre le procédé susmentionné, lors d'une exécution du programme par des moyens du récepteur de radiocommunication numérique.

D'autres particularités et avantages de la présente invention apparaîtront dans la description ci-après d'exemples de réalisation non limitatifs, en référence aux dessins annexés, dans lesquels :

- la figure 1 est un schéma synoptique d'un récepteur de radiocommunication de l'état de la technique ;
- la figure 2 est un schéma synoptique d'un récepteur de radiocommunication en râteau (rake) de l'état de la technique ;
- la figure 3 est un schéma synoptique d'un récepteur de radiocommunication selon l'invention ;
- la figure 4 est un diagramme illustrant une prise de décision sur la valeur de symboles transmis ;
- la figure 5 est un schéma illustrant une distribution statistique relative au bruit, obtenue selon l'invention.

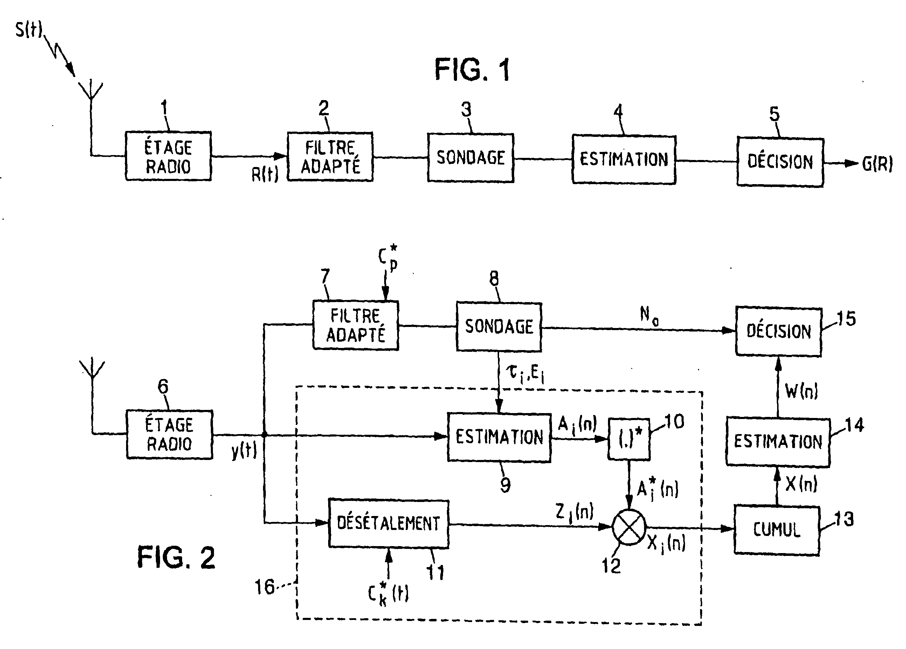

La figure 1 montre une architecture simplifiée d'un récepteur de radiocommunication de l'état de la technique. Ce récepteur de radiocommunication peut typiquement être celui d'un terminal radio, ou bien d'une station de base appartenant à un réseau de radiocommunication et apte à communiquer avec des terminaux radio.

Un signal S(t) est transmis sur un canal de propagation à l'attention du récepteur de la figure 1. Ce signal peut également être transmis sur plusieurs canaux de propagation, auquel cas le récepteur aura à effectuer une combinaison supplémentaire des signaux reçus sur ces différents canaux de propagation. On considère par la suite que le signal est transmis sur un seul canal de propagation, sans restreindre pour autant la généralité du propos.

Le récepteur de la figure 1 comprend des moyens de réception, notamment une ou plusieurs antennes pour recevoir le signal S(t) transmis. Un étage radio 1 se trouve classiquement à l'entrée du récepteur, de manière à effectuer un premier traitement du signal reçu. Par exemple, ce traitement peut consister à amplifier le signal analogique reçu, à le convertir en signal numérique et éventuellement à le filtrer. Le signal résultant est noté R(t).

Le récepteur comprend en outre un filtre adapté 2 qui effectue une démodulation cohérente, de manière à estimer la réponse impulsionnelle du canal de propagation sur lequel le signal considéré a été reçu. Un tel filtrage, est typiquement opéré sur des informations pilotes connues du récepteur.

Une analyse de la sortie de ce filtre adapté 2 est effectuée par un module de sondage 3. Ce dernier fait de façon classique des calculs statistiques sur la sortie du filtre adapté, pour en déduire des paramètres relatifs au canal de propagation. Il estime également un niveau $N_D$ du bruit sur le canal. Une évaluation régulière de ces paramètres est effectuée pour avoir une connaissance à jour du profil de propagation sur le canal considéré.

Une estimation de l'information contenue dans le signal transmis est alors effectuée par le module d'estimation 4 du récepteur de la figure 1. Cette estimation se base sur le signal reçu R(t) ainsi que sur les paramètres obtenus lors de l'analyse de la réponse impulsionnelle du canal de propagation par le module de sondage 3. Ainsi, on obtient une estimation de chaque symbole contenu dans le signal transmis.

Enfin, une prise de décision est réalisée dans le module de décision 5 du récepteur de la figure 1, à partir de l'estimation fournie par le module 4 pour chaque symbole.

La figure 2 illustre un exemple d'un récepteur de radiocommunication de l'état de la technique, fonctionnant selon les principes illustrés sur la figure 1, et adapté au système de radiocommunication UMTS ("Universal Mobile Telecommunication System").

On rappelle à cet effet que l'UMTS est un système de radiocommunication à accès multiple à répartition par codes (CDMA, "Code-Division Multiple Access"). Dans un tel système, les symboles transmis, binaires ($\pm 1$) ou quaternaires ($\pm 1 \pm j$), sont multipliés par des codes d'étalement composés d'échantillons, appelés "chips", dont la cadence (3,84 Mchip/s dans le cas de l'UMTS) est supérieure à celle des symboles transmis. Des codes d'étalement orthogonaux ou quasi-orthogonaux sont alloués à différents canaux logiques partageant la même fréquence porteuse, afin de permettre à chaque récepteur de détecter la séquence de symboles qui lui est destinée, en multipliant le signal reçu par le code d'étalement correspondant.

Le récepteur de la figure 2 est un récepteur de type "rake", encore appelé récepteur en râteau, qui tire profit des trajets multiples de propagation radio. Il s'agit bien sûr d'un exemple de récepteur parmi d'autres fonctionnant selon les principes de détection illustrés sur la figure 1.

Le signal numérique y(t), obtenu après réception du signal transmis au niveau de la ou des antennes du récepteur, et après traitement du signal reçu par l'étage radio 6, peut être représenté par la formule suivante, à raison d'un échantillon complexe par chip :

$$y(t) = \sum_{k} \sum_{i} A_i(t).b^k(t - \tau_i).c^k(t - \tau_i) + \varepsilon(t) \qquad (1)$$

où k est un index des canaux CDMA superposés sur la porteuse considérée, i est un index des trajets de propagation existant entre le ou les émetteurs et le récepteur, $b^k(t)$ est la suite de symboles mise en forme par l'émetteur sur le canal k, $c^k(t)$ est le code d'étalement du canal k, qui dans le cadre du système UMTS est le produit d'un code de brouillage et d'un code de "channelisation", $\tau_i$ est le retard de propagation estimé pour le trajet i, $A_i(t)$ est l'amplitude complexe de réception le long du trajet i à l'instant t, et $\varepsilon(t)$ est un bruit additif.

Dans le cas du système UMTS considéré dans cet exemple, une modulation par déplacement de phase (PSK, "Phase-Shift Keying") est utilisée. Le signal comprend deux composantes distinctes, une composante réelle et une composante imaginaire.

La réponse impulsionnelle du canal de propagation peut être estimée au moyen d'un filtre 7 adapté à un code d'étalement pilote cP avec lequel l'émetteur module une séquence de symboles connus. Une analyse de la sortie de ce filtre adapté est effectuée par un module de sondage 8. Ce dernier fait des calculs statistiques sur la sortie du filtre adapté 7 pour déterminer des retards $\tau_i$ associés aux trajets ou échos les plus énergétiques, ainsi que les énergies de réception $E_i$ moyennes associées à ces échos. Il estime également un niveau $N_0$ du bruit sur le canal. Une évaluation régulière de ces paramètres est effectuée pour avoir une connaissance à jour du profil de propagation sur le canal considéré.

Les échos les plus énergétiques détectés par le module de sondage 8 correspondent à des trajets principaux dépendant de l'environnement. L'écho le plus énergétique correspondra par exemple à un trajet direct entre l'émetteur et le récepteur si ceux-ci sont en visibilité directe l'un de l'autre. Les autres échos principaux seront schématiquement ceux qui donnent lieu au plus petit nombre de réflexions et diffractions entre l'émetteur et le récepteur.

L'énergie $E_i$ associée à un écho est l'espérance mathématique du module carré de l'amplitude instantanée $A_i(t)$ de réception sur le trajet de propagation correspondant.

Le module 8 fournit les retards $\tau_i$ et éventuellement les énergies $E_i$ sur les trajets de réception sélectionnés, estimés d'après le canal pilote de code cP et/ou d'après des symboles pilotes connus insérés dans le signal transmis, à des doigts du récepteur, à raison d'une valeur de $\tau_i$ et de $E_i$ par doigt.

Chaque doigt 16 du récepteur effectue une opération de désétalement 11 du signal y(t), équivalente à l'échantillonnage du filtre adapté au code d'étalement $c^k(t)$ pour le retard $\tau_i$, qui lui a été communiqué par le module 8. Cette opération de désétalement peut s'écrire :

$$Z_i(n) = \sum_{t} y(t).c^{k^*}(t - \tau_i) \qquad (2)$$

où la somme sur t porte sur les chips correspondant à la réception du n-ième symbole de la séquence transmise sur le canal k. Du fait des propriétés d'orthogonalité des codes $c^k(t)$, l'opération (2) fait ressortir la contribution du trajet i au signal, les autres contributions étant vues comme du bruit après désétalement.

Parallèlement à ce désétalement, le doigt 16 actif effectue une estimation 9 de l'amplitude complexe $A_i(n)$ du

signal sur la durée du n-ième symbole, c'est-à-dire pour le symbole n qu'on cherche à estimer. Le conjugué $A_i^*(n)$ de cette amplitude complexe est calculé (référence 10 sur la figure 2).

Le module 12 du doigt 16 considéré procède alors à la pondération MRC du signal désétalé selon la formule suivante, en le multipliant par le complexe conjugué $A_i^*(n)$ :

$$X_i(n) = Z_i(n).A_i^*(n) \qquad (3)$$

Les opérations décrites plus haut ont permis d'obtenir une première estimation $X_i(n)$ du symbole n, correspondant à la contribution du trajet i à l'estimation du n-ième symbole. Le module de cumul 13, disposé en sortie des doigts du "rake", effectue la somme des différentes contributions pour produire une estimation cumulée du symbole transmis, selon la formule :

$$X(n) = \sum_i X_i(n) \qquad (4)$$

Le module d'estimation 14, en sortie du module de cumul 7, permet d'obtenir une estimation souple W(n) de chaque symbole n transmis, en fonction de la modulation utilisée et sur la base de la valeur X(n) obtenue.

Lorsque les symboles transmis sont binaires, avec une modulation de type BPSK ("Binary Phase Shift Keying"), comme c'est le cas pour les liaisons montantes dans le système UMTS, W(n) est la partie réelle de la somme X(n) fournie par le module de cumul 13. Son signe constitue l'estimation dure du bit n et sa valeur absolue, rapportée à la puissance estimée du bruit $N_D$, mesure en première approximation la vraisemblance de cette estimation dure, c'est-à-dire un paramètre de fiabilité de l'estimation cumulée X(n) obtenue.

Lorsque les symboles transmis sont quaternaires, avec une modulation de type QPSK ("Quaternary Phase Shift Keying"), comme c'est le cas pour les liaisons descendantes dans le système UMTS, l'information transmise dans le signal y(t) est codée sur des symboles comportant deux bits chacun. La valeur. X(n) obtenue à l'issue du désétalement effectué par le premier doigt du "rake" et de l'opération de pondération 12 est une valeur complexe. L'estimation souple W(n) est égale à X(n) dans ce cas. Elle peut être comparée à la constellation de la modulation QPSK. La combinaison des signes des parties réelle et imaginaire de W(n) constitue l'estimation dure du bit n et une combinaison de leurs valeurs absolues, rapportées à la puissance estimée du bruit $N_0$, mesure en première approximation la vraisemblance de cette estimation dure. Un paramètre de fiabilité de l'estimation souple ainsi obtenue peut donc consister par exemple en la plus petite des valeurs absolues des parties réelle et imaginaire de W(n).

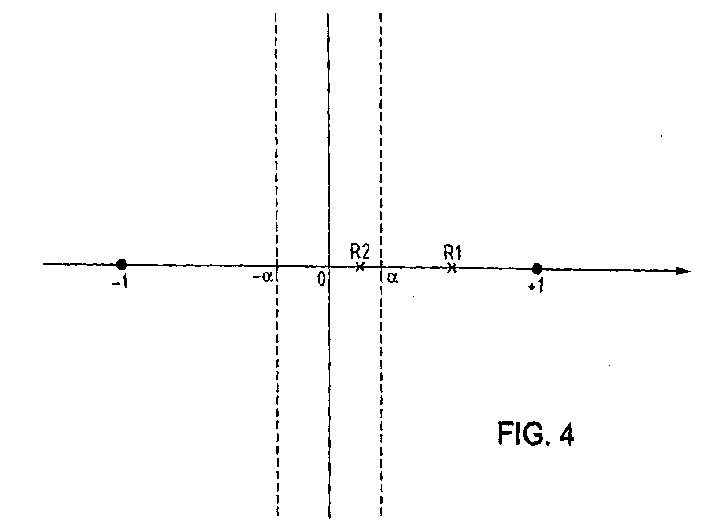

La figure 4 illustre une constellation normalisée correspondant à la modulation BPSK, où les symboles transmis sont binaires et peuvent donc prendre une valeur parmi -1 et +1. Si l'estimation W(n) obtenue pour le n-ième symbole correspond à l'abscisse R1 illustrée sur la figure 4, on en conclut que le symbole n est égal à +1, puisque R1 est de signe positif, Il en est de même si l'estimation W(n) obtenue pour le n-ième symbole correspond à l'abscisse R2 illustrée sur la figure 4, bien que la fiabilité de cette estimation soit moindre que dans le cas de R1 (puisque R2<R1).

Plus généralement, on peut montrer que la décision prise finalement par les récepteurs connus de la figure 1 ou 2 est basée sur l'hypothèse que le bruit affectant le canal de propagation sur lequel le signal considéré a été reçu est un bruit blanc gaussien. En effet, un bruit blanc gaussien x(t) est caractérisé par une densité de probabilité g(x) de la forme :

$$g(x) = \frac{1}{\sqrt{2\pi}.\sigma} \exp\left(\frac{-x^2}{2.\sigma^2}\right) \qquad (5)$$

Or, le bruit x(t) affectant le canal de propagation peut être assimilé à la différence entre le signal reçu au niveau du récepteur et le signal transmis par le ou les émetteurs. En reprenant les notations utilisées en référence à la figure 1, on a donc x(t) = R(t)-S(t).

Dans l'hypothèse où les symboles transmis dans le signal considéré sont binaires, et si l'on s'intéresse à la portion R du signal reçu correspondant au symbole n de la séquence binaire transmise, la fonction de vraisemblance L(R) de la détection effectuée au niveau du récepteur est le rapport entre la probabilité de recevoir le signal R sachant qu'un symbole +1 a été émis, et la probabilité de recevoir le signal R sachant qu'un symbole -1 a été émis.

On peut alors déduire de l'équation (5), que L(R) peut s'écrire sous la forme suivante :

$$L(R) = \frac{\exp(\frac{-(R-S)^2}{2 \cdot \sigma^2})}{\exp(\frac{-(R+S)^2}{2 \cdot \sigma^2})} \qquad (6),$$

où S est égal à $\sqrt{E_b}$ , $E_b$ étant l'énergie correspondant à l'émission du symbole considéré de la séquence binaire. L(R) étant une fonction monotone, la détection peut être effectuée sur le logarithme népérien de cette fonction, c'est-à-dire sur Ln(L(R)), soit, après simplification, sur :

$$Ln(L(R)) = \frac{4 \cdot R \cdot S}{2 \cdot \sigma^2} \qquad (7),$$

ou encore:

$$G(R) = Ln(L(R)) = \frac{4 \cdot \sqrt{E_b} \cdot R}{2 \cdot \sigma^2} \qquad (8).$$

La décision est alors prise en fonction de la valeur de G(R). On retrouve ainsi le fait que le récepteur de la figure 1 ou 2 décide de la valeur du symbole considéré sur la base d'une estimation préalable du symbole reçu R (estimations normalisées R1 et R2 sur la figure 4) à un coefficient multiplicateur près.

Il a été constaté qu'une estimation basée sur l'hypothèse préalable selon laquelle le bruit affectant le ou les canaux de propagation considérés est un bruit blanc gaussien, conduit parfois à des erreurs de détection des symboles transmis sur ce ou ces canaux de propagation. Ceci est particulièrement vrai lorsque le bruit affectant ces canaux est issu de la contribution d'un seul interféreur prépondérant, surpassant largement la contribution d'autres intérfereurs et du bruit thermique. Cet interféreur prépondérant peut par exemple résulter de l'utilisation d'autres canaux de propagation par un utilisateur proche du récepteur de radiocommunication considéré, ou bien par un utilisateur effectuant une communication à forte puissance d'émission ou une transmission de données à débit élevé. En variante, deux interféreurs ou un nombre restreint d'interféreurs supérieur à deux, apportent une contribution prépondérante au bruit affectant les canaux de propagation considérés.

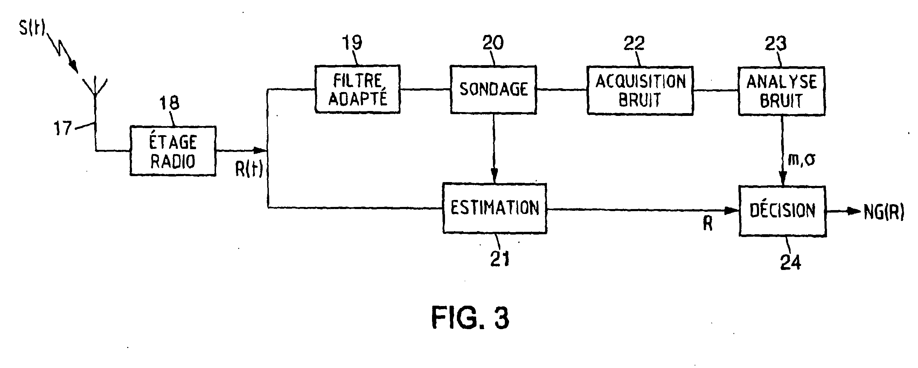

Le récepteur de radiocommunication de la figure 3 permet la détection des symboles d'un signal reçu sans faire l'hypothèse a priori que le bruit affectant le ou les canaux de propagation considérés est un bruit blanc gaussien. Il permet donc ainsi une détection même dans le cas où le bruit n'est pas assimilable à un bruit gaussien.

Ce récepteur comprend, comme pour les récepteurs de l'état de la technique présentés plus haut, une ou plusieurs antennes 17 pour recevoir un signal S(t). Il comprend en outre un étage radio 18, un filtre 19 adapté au canal de propagation considéré (qu'on considère comme unique par la suite sans restreindre la généralité de l'invention), un module de sondage 20 et un module d'estimation de symboles 21. Par ailleurs, le récepteur comprend un module d'estimation 21 apte à déterminer une première estimation R de chaque symbole porté par le signal reçu R(t).

Ces différents modules peuvent fonctionner comme dans les cas décrits précédemment. Par exemple, si le récepteur de la figure 3 est un récepteur fonctionnant selon la technologie UMTS, ses différents modules peuvent être ceux du récepteur rake illustré sur la figure 2 et l'estimation initiale R de chaque symbole porté par le signal reçu R(t) est issue de la combinaison d'estimations effectuées par des doigts respectifs du rake.

Toutefois, le récepteur de la figure 3 comporte en outre un module 22 d'acquisition du bruit. Celui-ci consiste à calculer des estimations successives du bruit sur le canal de propagation considéré. Pour ce faire, le récepteur mesure des niveaux d'énergie, par exemple ramenés à la durée d'un symbole. Dans le cas d'un récepteur de type UMTS, cette énergie mesurée au récepteur est par exemple donnée par le calcul du paramètre RSCP ("Received Signal Code Power") sur les symboles pilotes prédéterminés d'un canal de contrôle (DPCCH). Les symboles pilotes étant émis à puissance prédéterminée et étant connus du récepteur, un échantillon de bruit peut alors être déduit de chaque symbole pilote par soustraction du signal reçu ramené à la durée du symbole correspondant.

Ainsi, le module 22 d'acquisition du bruit constitue un histogramme des échantillons du bruit estimés. On obtient donc une distribution statistique d'échantillons du bruit sur le canal de propagation considéré. Bien sûr, le récepteur de la figure 3, pourrait obtenir une telle distribution statistique relative au bruit d'une autre façon, par exemple sur la base de simulations sur le canal de propagation considéré.

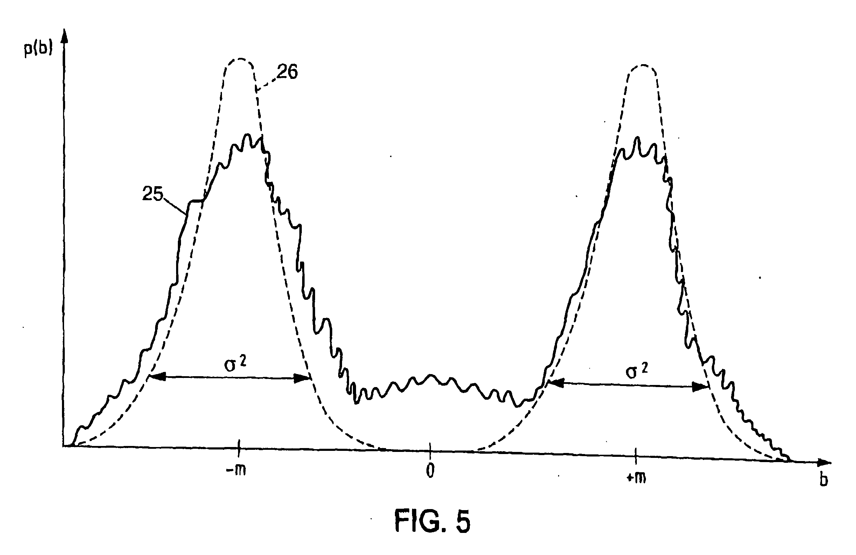

La figure 5 schématise une distribution statistique 25 du bruit, obtenue par le module 22. Chaque échantillon d'énergie b du bruit estimé est porté sur cette distribution. On obtient ainsi la probabilité p(b) de chaque valeur du bruit, après observation sur une période de temps significative. Cette distribution peut ainsi être assimilée à une densité de probabilité du bruit sur le canal de propagation considéré.

Le module 23 effectue une analyse du bruit, à partir de la distribution statistique relative au bruit obtenue par le module 22. Cette analyse consiste à choisir un modèle statistique parmi plusieurs modèles pour décrire la distribution statistique du bruit. De façon avantageuse, un des modèles statistiques pouvant être choisi est une somme d'au moins deux gaussiennes. Ce modèle est notamment bien adapté dans le cas où la contribution d'un seul interféreur est prépondérante dans le bruit affectant le canal de propagation considéré. La figure 5 illustre un tel cas où la densité de probabilité 25 du bruit est décrite par une somme de deux gaussiennes centrées respectivement sur les réels -m et m, et de même variance σ. Cette somme est représentée par la courbe 26 sur la figure 5.

Bien sûr d'autres modèles statistiques de la pluralité de modèles disponibles peuvent être choisis par le récepteur, pour mieux caractériser la distribution statistique du bruit obtenue. Par exemple, les deux gaussiennes sommées sur la courbe 26 pourraient être centrées respectivement autour de valeurs non symétriques $m_1$ et $m_2$, avec $m_2 \neq -m_1$, ou bien avoir des variances $\sigma_1$ et $\sigma_2$ différentes. Par ailleurs, une somme de plus de deux gaussiennes pourrait être choisie pour décrire la distribution 25. Il est encore possible d'utiliser une fonction ou une application différente d'une somme de gaussiennes pour modéliser la distribution 25.

Dans un autre exemple, une simple gaussienne peut servir de modèle statistique, notamment lorsque le bruit est issu de contributions diverses dont aucune ne surpasse largement les autres. Cela revient à détecter que le bruit est sensiblement un bruit blanc gaussien, sans toutefois en prendre l'hypothèse a priori. On s'assure ainsi que la détection des symboles reçus est effectuée sur la base d'hypothèses sur le bruit plus fiables que dans le cas classique décrit ci-dessus, puisque le bruit est caractérisé a posteriori (après observations sur le canal de propagation) et non a priori ce qui peut être inadapté dans certains cas.

Dans ce qui suit, on détaille plus particulièrement le cas, illustré sur la figure 5, où la densité de probabilité relative au bruit est décrite selon une somme de deux gaussiennes proportionnelle à l'expression :

$$\exp(\frac{-(R-S-m)^2}{2 \cdot \sigma'^2}) + \exp(\frac{-(R-S+m)^2}{2 \cdot \sigma'^2}) \qquad (9).$$

En effet, à titre d'exemple, de simples calculs ou simulations montrent que la densité de probabilité d'un signal de type porteuse sinusoïdale modulée par un signal télégraphique (équi-répartition de 1 et de -1) peut être assimilée à une somme de deux fonctions gaussienne de moyenne + m et -m et de même variance.

La décision quant à la valeur d'un symbole dépend donc de l'estimation initiale R de la portion de signal reçu correspondant au symbole à détecter, ainsi que de la valeur m caractéristique des gaussiennes de la courbe 26 (centrées respectivement autour de -m et m) et de la variance σ des gaussiennes.

Si l'on choisit le même type de critère de décision que dans le cas décrit précédemment, on montre alors que la décision est prise sur la base de la quantité NG(R) suivante :

$$NG(R) = Ln(L(R)) = Ln(\frac{\exp(\frac{-(R-S-m)^2}{2 \cdot \sigma^2}) + \exp(\frac{-(R-S+m)^2}{2 \cdot \sigma^2})}{\exp(\frac{-(R+S-m)^2}{2 \cdot \sigma^2}) + \exp(\frac{-(R+S+m)^2}{2 \cdot \sigma^2})}) \qquad (10),$$

où S est égal à $\sqrt{E_b}$, $E_b$ étant l'énergie correspondant à l'émission du symbole considéré de la séquence binaire.

On dispose d'une estimation initiale R du symbole reçu à déterminer. Par ailleurs, le module d'analyse du bruit 23 permet de détecter les paramètres caractéristiques de la densité de probabilité du bruit que sont la variance σ de chaque gaussienne modélisant la densité de probabilité du bruit (σ peut par exemple être calculée à partir de la largeur de chacun des pics de la courbe 26, comme illustré sur la figure 5), ainsi que la valeur —m ou m autour de laquelle chaque gaussienne est centrée, dans l'exemple illustré sur la figure 5.

Ces paramètres σ et m sont finalement transmis au module de décision 24 du récepteur de la figure 3, en plus de l'estimation R effectuée par le module 21 par exemple selon les principes décrits plus haut. Le module de décision 24 calcule alors une estimation finale NG(R) de chaque symbole porté par le signal reçu R(t) sur la base de ces paramètres, par exemple selon la formule (10).

On donne ci-après un exemple numérique simplifié pour illustrer le mode de décision mis en oeuvre par le module 24 du récepteur de radiocommunication de la figure 3. On considère que le signal émis comporte un symbole S dont la valeur binaire est égale à -1 et que ce signal est émis avec un niveau de puissance schématiquement fixé à 0,16 mW correspondant à une tension normalisés de 0,4 mV. On considère par ailleurs que le signal reçu au récepteur de radiocommunication considéré a un niveau de puissance de 0,04 mW correspondant à une tension normalisée de 0,2 mV.

Le récepteur recevant un tel signal doit alors estimer la valeur du symbole reçu. Ce faisant, il doit choisir entre les deux possibilités suivantes : soit le symbole transmis était égal à -1 et le bruit affectant le canal de propagation impliqué a provoqué une augmentation de 0,6 mV de la tension initiale du signal transmis (c'est-à-dire 0,2=-1×0,4+0,6), soit le symbole transmis était égal à +1 et le bruit affectant le canal de propagation impliqué a provoqué une réduction de 0,2 mV de la tension initiale du signal transmis (c'est-à-dire 0,2 = 1×0,4-0,2).

On peut montrer qu'un récepteur classique faisant l'hypothèse a priori que le bruit affectant le canal de propagation considéré est gaussien conduirait à décider, de façon erronée, que le symbole transmis était égal à +1, puisque G(0,2), selon la formule (8), est positif. En revanche, NG(0,2), selon la formule (10), est négatif, dans le cas où la densité de probabilité relative au bruit est assimilée à une somme de deux gaussiennes et sous certaines hypothèses concernant la valeur des paramètres m et σ. Le récepteur déduit alors de la valeur calculée de NG(0,2) que le symbole transmis doit être estimé à -1. Dans un tel cas, un récepteur ne faisant pas l'hypothèse a priori que le bruit affectant le canal de propagation considéré est un bruit blanc gaussien conduit donc à une estimation du symbole transmis plus fiable qu'un récepteur classique.

En revanche, dans d'autres cas, un récepteur classique aboutirait à une détection identique à celle d'un récepteur fonctionnant selon les principes de l'invention. Ce pourrait par exemple être le cas, lorsqu'un symbole R reçu a une valeur proche de +1 ou -1, ce qui indique que le symbole transmis S correspondant était probablement égal à +1 ou -1 respectivement.

On peut montrer, dans le cas particulier où le bruit a une densité de probabilité assimilable à une somme de deux gaussiennes centrées symétriques et de même variance, qu'il existe un entier positif $\alpha$ tel que, si l'abscisse correspondante au symbole reçu R, dans la constellation de la figure 4, a une valeur absolue supérieure à $|\alpha|$ (dans l'hypothèse où les symboles transmis sont binaires et la modulation est de type BPSK), le récepteur estime le symbole R comme le ferait un récepteur classique. Ainsi, en notant R l'abscisse considérée, le symbole est estimé à +1 si $R>\alpha$, et à -1 si $R<-\alpha$. En revanche, si $|R|<|\alpha|$, le comportement d'un récepteur selon l'invention diffère d'un récepteur classique, en ce sens que le R est estimé à -1 lorsque $0<R<\alpha$ et R est estimé à +1 lorsque $-\alpha<R<0$.

Ainsi, le symbole reçu donnant lieu à l'estimation R1 dans la constellation de la figure 4, serait estimé à +1, par le récepteur de la figure 3, comme pour celui de la figure 1 ou 2. En revanche, le symbole reçu donnant lieu à l'estimation R2 dans la constellation de la figure 4, serait estimé à -1 par le récepteur de la figure 3, mais à +1 par le récepteur de la figure 1 ou 2.

Toutefois, même si l'on se trouve dans un cas où le récepteur classique aboutirait à une détection identique à celle d'un récepteur selon l'invention, on note que la quantité NG(R) est toujours plus réaliste que G(R), du moins lorsque le bruit considéré n'est pas totalement assimilable à un bruit blanc gaussien. Le récepteur selon l'invention permet donc une détection plus fiable qu'un récepteur classique dans tous les cas de figure.

Dans un mode de réalisation particulier de l'invention, on dispose d'un récepteur mixte ayant à la fois des premières capacités pour fonctionner de façon classique en prenant pour hypothèse a priori que le bruit affectant le ou les canaux de propagation considérés est gaussien, et des secondes capacités pour fonctionner selon les principes de l'invention exposés en référence à la figure 3.

A titre d'exemple, on considère que les secondes capacités du récepteur utilisent une somme de deux gaussiennes comme modèle statistique pour décrire le bruit, ce qui est particulièrement adapté au cas où le bruit affectant le ou les canaux de propagation considérés est issu d'un interféreur prépondérant.

Le basculement entre les premières et secondes capacités peut être fait par exemple suite à une analyse du bruit sur le ou les canaux de propagation considérés, grâce à des modules du type du module 22 d'acquisition du bruit et du module 23 d'analyse du bruit du récepteur de la figure 3.

Le basculement peut également être commandé selon une connaissance relative aux interféreurs prépondérants impactant un ou des canaux de propagation donnés, par exemple la connaissance d'un nombre d'interféreurs contribuant de façon prépondérante dans le bruit.

Par exemple, une station de base d'un système de radiocommunication obtient des informations concernant les ressources utilisées dans le sens montant (d'un terminal radio vers ladite station de base). Lorsqu'on se trouve dans la cadre du système UMTS, ces ressources sont des codes de communications choisis en fonction d'un débit de transmission pour la communication correspondante. Lorsqu'une station de base détecte qu'un code a été alloué pour un terminal radio, de façon à ce que la communication qui en résulte ait un débit élevé par rapport aux autres communications en cours avec cette station de base, elle peut alors considérer que cette communication à haut débit est une source d'interférence prépondérante vis-à-vis des autres canaux de propagation qu'elle écoute. Elle peut alors avantageusement décider d'activer ses secondes capacités de réception, puisque le bruit affectant lesdits canaux de propagation n'est probablement pas gaussien dans un tel cas.

A l'inverse, lorsque aucun interféreur prépondérant n'a été détecté par la station de base, celle-ci peut choisir d'activer ses premières capacités de réception, en faisant ainsi l'hypothèse que le bruit est blanc gaussien en ce qui concerne lesdits canaux de propagation écoutés par la station de base.

Le choix d'activer les premières ou les secondes capacités de réception est ainsi basé sur un nombre d'interféreurs contribuant de façon prépondérante dans le bruit et sur la comparaison entre ce nombre d'interféreurs et un nombre prédéterminé. Ce nombre prédéterminé est égal à 1 dans l'exemple décrit plus haut, mais il peut également prendre des valeurs supérieures à 1.

Les différentes opérations décrites ci-dessus peuvent être mises en oeuvre à l'aide d'un programme d'ordinateur installé dans un récepteur de radiocommunication numérique. Ce programme comprend alors des instructions pour réaliser ces différentes opérations lorsqu'il est exécuté par des moyens appropriés du récepteur de radiocommunication numérique.

## Revendications

**1.** Procédé de traitement de signal pour un récepteur de radiocommunication numérique, comprenant les étapes suivantes, relativement à au moins un canal de propagation affecté par du bruit :

- calculer des estimations successives dudit bruit :
- choisir un modèle statistique parmi une pluralité de modèles statistiques, pour décrire une distribution statistique (25) du bruit en fonction des estimations successives calculées dudit bruit ;
- détecter des paramètres (m, σ) relatifs à ladite distribution statistique, en fonction du modèle statistique choisi ; et
- calculer une estimation d'au moins un symbole porté par un signal radio (s(t)) reçu sur ledit canal de propagation, en tenant compte des paramètres détectés relatifs à ladite distribution statistique.

**2.** Procédé selon la revendication 1, dans lequel la distribution statistique du bruit est une densité de probabilité relative aux estimations successives calculées du bruit.

**3.** Procédé selon la revendication 2, dans lequel les estimations successives du bruit sont calculées à partir de mesures d'énergie effectuées sur des informations transmises à puissance prédéterminée sur ledit canal de propagation.

**4.** Procédé selon l'une quelconque des revendications précédentes, dans lequel ladite pluralité de modèles statistiques comprend au moins : une gaussienne et une somme d'au moins deux gaussiennes.

**5.** Procédé selon la revendication 4, dans lequel les paramètres relatifs à ladite distribution statistique comprennent, pour chaque gaussienne du modèle statistique choisi, au moins l'un parmi : une valeur autour de laquelle ladite gaussienne est sensiblement centrée et une variance.

**6.** Procédé selon l'une quelconque des revendications précédentes, dans lequel les étapes précédentes sont mises en oeuvre de façon sélective selon le résultat d'une comparaison entre un nombre d'interféreurs contribuant de façon prépondérante dans ledit bruit et un nombre prédéterminé.

**7.** Procédé selon la revendication 6, dans lequel les étapes précédentes sont mises en oeuvre lorsque le nombre d'interféreurs contribuant de façon prépondérante dans ledit bruit est inférieur ou égal au nombre prédéterminé, et dans lequel, lorsque le nombre d'interféreurs contribuant de façon prépondérante dans ledit bruit est strictement supérieur au nombre prédéterminé, on calcule une estimation d'au moins un symbole porté par le signal radio reçu à partir de l'hypothèse selon laquelle ledit bruit est un bruit blanc gaussien.

**8.** Procédé selon la revendication 6 ou 7, dans lequel ledit nombre prédéterminé est égal à 1.

**9.** Récepteur de radiocommunication numérique, comprenant, relativement à au moins un canal de propagation affecté par du bruit :

- des moyens pour calculer des estimations successives dudit bruit ;
- des moyens (22) pour choisir un modèle statistique parmi une pluralité de modèles statistiques, pour décrire une distribution statistique (25) du bruit en fonction des estimations successives calculées dudit bruit ;
- des moyens (23) pour détecter des paramètres (m, σ) relatifs à ladite distribution statistique, en fonction du modèle statistique choisi ; et
- des moyens (24) pour calculer une estimation d'au moins un symbole porté par un signal radio reçu sur ledit canal de propagation, en tenant compte des paramètres détectés relatifs à ladite distribution statistique.

**10.** Récepteur de radiocommunication numérique selon la revendication 9. dans lequel la distribution statistique du bruit est une densité de probabilité relative aux estimations calculées par lesdits moyens pour calculer des estimations successives du bruit.

**11.** Récepteur de radiocommunication numérique selon la revendication 10. comprenant en outre des moyens pour mesurer une énergie sur des informations transmises à puissance prédéterminée sur ledit canal de propagation, et dans lequel les moyens pour calculer des estimations successives du bruit calculent lesdites estimations successives du bruit à partir de mesures d'énergie effectuées par lesdits moyens pour mesurer une énergie sur des informations transmises à puissance prédéterminée sur ledit canal de propagation.

**12.** Récepteur de radiocommunication numérique selon l'une quelconque des revendications 9 à 11, dans lequel ladite pluralité de modèles statistiques comprend au moins : une gaussienne et une somme d'au moins deux gaussiennes.

**13.** Récepteur de radiocommunication numérique selon la revendication 12, dans lequel les paramètres relatifs à la distribution statistique détectés par les moyens pour détecter des paramètres relatifs à la distribution statistique comprennent, pour chaque gaussienne du modèle statistique choisi, au moins l'un parmi : une valeur autour de laquelle ladite gaussienne est sensiblement centrée et une variance.

**14.** Récepteur de radiocommunication numérique selon l'une quelconque des revendications 9 à 12, comprenant des moyens pour obtenir une information relative à un nombre d'interféreurs contribuant de façon prépondérante dans ledit bruit, et dans lequel les moyens précédents sont mis en oeuvre de façon sélective selon le résultat d'une comparaison entre ledit nombre d'interféreurs contribuant de façon prépondérante dans le bruit et un nombre prédéterminé.

**15.** Récepteur de radiocommunication numérique selon la revendication 14, dans lequel les moyens précédents sont mis en oeuvre lorsque le nombre d'interféreurs contribuant de façon prépondérante dans ledit bruit est inférieur ou égal au nombre prédéterminé, et comprenant en outre des moyens pour calculer, lorsque le nombre d'interféreurs contribuant de façon prépondérante dans ledit bruit est strictement supérieur au nombre prédéterminé, une estimation d'au moins un symbole porté par le signal radio reçu à partir de l'hypothèse selon laquelle ledit bruit est un bruit blanc gaussien.

**16.** Récepteur de radiocommunication numérique selon la revendication 14 ou 15, dans lequel ledit nombre prédéterminé est égal à 1.

**17.** Produit programme d'ordinateur à installer dans un récepteur de radiocommunication numérique, comprenant des Instructions pour mettre en oeuvre le procédé selon l'une quelconque des revendications 1 à 8, lors d'une exécution du programme par des moyens du récepteur de radiocommunication numérique.

**Claims**

**1.** Signal-processing method for a digital radiocommunication receiver, comprising the following steps, in relation to at least one propagation channel affected by noise:

- calculate successive estimates of the said noise;

- choose a statistical model from a plurality of statistical models in order to describe a statistical distribution (25) of the noise as a function of the successive calculated estimates of the said noise;
- detect parameters $(m, \sigma)$ relating to the said statistical distribution, as a function of the chosen statistical model; and
- calculate an estimate of at least one symbol carried by a radio signal $(s(t))$ received on the said propagation channel, taking account of the detected parameters relating to the said statistical distribution.

2. Method according to Claim 1, in which the statistical distribution of the noise is a probability density relating to the calculated successive estimates of the noise.

3. Method according to Claim 2, in which the successive estimates of the noise are calculated based on energy measurements taken on information transmitted at predetermined power on the said propagation channel.

4. Method according to any one of the preceding claims, in which the said plurality of statistical models comprises at least: a Gaussian distribution and a total of at least two Gaussian distributions.

5. Method according to Claim 4, in which the parameters relating to the said statistical distribution comprise, for each Gaussian distribution of the chosen statistical model, at least one of: a value around which the said Gaussian distribution is substantially centred and a variance.

6. Method according to any one of the preceding claims, in which the preceding steps are applied in a selective manner according to the result of a comparison between a number of interferers contributing in a predominant manner to the said noise and a predetermined number.

7. Method according to Claim 6, in which the preceding steps are applied when the number of interferers contributing in a predominant manner to the said noise is less than or equal to the predetermined number, and in which, when the number of interferers contributing in a predominant manner to the said noise is strictly higher than the predetermined number, the user calculates an estimate of at least one symbol carried by the received radio signal based on the assumption that the said noise is a white Gaussian noise.

8. Method according to Claim 6 or 7, in which the said predetermined number is equal to 1.

9. Digital radiocommunication receiver comprising, in relation to at least one propagation channel affected by noise:

- means for calculating successive estimates of the said noise;
- means (22) for choosing a statistical model from a plurality of statistical models in order to describe a statistical distribution (25) of the noise as a function of the calculated successive estimates of the said noise;
- means (23) for detecting parameters $(m, \sigma)$ relative to the said statistical distribution, as a function of the statistical model chosen; and
- means (24) for calculating an estimate of at least one symbol carried by a radio signal received on the said propagation channel, taking account of the parameters detected relative to the said statistical distribution.

10. Digital radiocommunication receiver according to Claim 9, in which the statistical distribution of the noise is a probability density relative to the estimates calculated by the said means for calculating successive estimates of the noise.

11. Digital radiocommunication receiver according to Claim 10, also comprising means for measuring an energy on information transmitted at predetermined power on the said propagation channel, and in which the means for calculating successive estimates of the noise calculate the said successive estimates of the noise based on energy measurements taken by the said means in order to measure an energy on information transmitted at predetermined power on the said propagation channel.

12. Digital radiocommunication receiver according to any one of Claims 9 to 11, in which the said plurality of statistical models comprises at least: a Gaussian distribution and a total of at least two Gaussian distributions.

13. Digital radiocommunication receiver according to Claim 12, in which the statistical distribution-related parameters detected by the means for detecting parameters relative to the statistical distribution comprise, for each Gaussian distribution of the chosen statistical model, at least one of: a value around which the said Gaussian distribution is substantially centred and a variance.

14. Digital radiocommunication receiver according to any one of Claims 9 to 12, comprising means for obtaining an item of information relating to a number of interferers contributing in a predominant manner to the said noise, and in which the preceding means are applied in a selective manner according to the result of a comparison between the said number of interferers contributing in a predominant manner to the noise and a predetermined number.

15. Digital radiocommunication receiver according to Claim 14, in which the preceding means are applied when the number of interferers contributing in a predominant manner to the said noise is lower than or equal to the predetermined number, and also comprising means for calculating, when the number of interferers contributing in a predominant manner to the said noise is strictly higher than the predetermined number, an estimate of at least one symbol carried by the received radio signal based on the assumption that the said noise is a white Gaussian noise.

16. Digital radiocommunication receiver according to Claim 14 or 15, in which the said predetermined number is equal to 1.

17. Computer program product to be installed in a digital radiocommunication receiver, comprising instructions for applying the method according to any one of Claims 1 to 8, during an execution of the program by means of the digital radiocommunication receiver.

**Patentansprüche**

1. Verfahren zur Signalverarbeitung für einen digitalen Funkkommunikationsempfänger, mit folgenden Schritten, in Bezug auf wenigstens einen geräuschbehafteten Ausbreitungskanal :

   - Berechnung aufeinanderfolgender Schätzwerte dieses Geräusches ;
   - Auswahl eines statistischen Musters aus einer Mehrzahl von statistischen Mustern, um eine statistische Verteilung (25) des Geräusches abhängig von den berechneten aufeinanderfolgenden Schätzwerten dieses Geräusches zu beschreiben ;
   - Ermittlung sich auf diese statistische Verteilung beziehender Parameter (m, σ) abhängig vom ausgewählten statistischen Muster ; und
   - Berechnung eines Schätzwerts wenigstens eines von einem auf den Ausbreitungskanal empfangenen Funksignal (s(t)) getragenen Symbols mit Rücksicht auf den sich auf diese statistische Verteilung beziehenden Parametern.

2. Verfahren nach Anspruch 1, wobei die statistische Verteilung des Geräusches eine sich auf die berechneten aufeinanderfolgenden Schätzwerte des Geräusches beziehende Wahrscheinlichkeitsdichte ist.

3. Verfahren nach Anspruch 2, wobei die aufeinanderfolgenden Schätzwerte des Geräusches aus Energiemessungen berechnet werden, die aus über den Ausbreitungskanal mit einer vorbestimmten Leistung übertragenen Informationen durchgeführt werden.

4. Verfahren nach irgendeinem der vorangehenden Ansprüche, wobei die Mehrzahl von statistischen Mustern wenigstens eine Gaußkurve und eine Summe aus wenigstens zwei Gaußkurven umfasst.

5. Verfahren nach Anspruch 4, wobei für jede Gaußkurve des ausgewählten statistischen Musters die sich auf diese statistische Verteilung beziehender Parameter wenigstens ein Parameter unter einem Wert, um den diese Gaußkurve wesentlich zentriert ist, und einer Varianz umfassen.

6. Verfahren nach irgendeinem der vorangehenden Ansprüche, wobei die vorangehenden Schritte in Abhängigkeit vom Ergebnis einer Vergleich zwischen einer Anzahl von zum Geräusch vorwiegend beitragenden Störsignalen und einer vorbestimmter Anzahl selektiv ausgeführt werden.

7. Verfahren nach Anspruch 6, wobei die vorangehenden Schritte ausgeführt werden, wenn die Anzahl von zum Geräusch vorwiegend beitragenden Störsignalen gleich oder niedriger als die vorbestimmte Anzahl ist und wobei eine Schätzung wenigstens eines vom empfangenen Signal getragenen Symbols berechnet wird, mit der Annahme dass das Geräusch ein gaußsches weißes Rauschen ist, wenn die Anzahl von zum Geräusch vorwiegend beitragenden Störsignalen streng größer ist als die vorbestimmte Anzahl.

8. Verfahren nach Anspruch 6 oder 7, wobei die vorbestimmte Anzahl gleich 1 ist.

9. Digitaler Funkkommunikationsempfänger, umfassend, in Bezug auf wenigstens einen geräuschbehafteten Ausbreitungskanal :

- Mittel zur Berechnung aufeinanderfolgender Schätzwerte dieses Geräusches ;
- Mittel (22) zur Auswahl eines statistischen Musters aus einer Mehrzahl von statistischen Mustern, um eine statistische Verteilung (25) des Geräusches abhängig von den berechneten aufeinanderfolgenden Schätzwerten dieses Geräusches zu beschreiben ;
- Mittel (23) zur Ermittlung sich auf diese statistische Verteilung beziehender Parameter (m, σ) abhängig vom ausgewählten statistischen Muster ; und
- Mittel (24) zur Berechnung eines Schätzwerts wenigstens eines von einem auf den Ausbreitungskanal empfangenen Funksignal getragenen Symbols, mit Rücksicht auf den ermittelten sich auf diese statistische Verteilung beziehenden Parametern.

10. Digitaler Funkkommunikationsempfänger nach Anspruch 9, wobei die statistische Verteilung des Geräusches eine sich auf die aufeinanderfolgenden Schätzwerte des Geräusches beziehende Wahrscheinlichkeitsdichte ist, die von den Mitteln zur Berechnung aufeinanderfolgender Schätzwerte dieses Geräusches berechnet wurden.

11. Digitaler Funkkommunikationsempfänger nach Anspruch 10, ausserdem umfassend Mittel zur Messung einer Energie aus über den Ausbreitungskanal mit einer vorbestimmten Leistung übertragenen Informationen, wobei die Mittel zur Berechnung aufeinanderfolgender Schätzwerte dieses Geräusches diese aufeinanderfolgenden Schätzwerte dieses Geräusches aus Energiemessungen berechnen, die von den Mitteln zur Messung einer Energie aus über den Ausbreitungskanal mit einer vorbestimmten Leistung übertragenen Informationen durchgeführt werden.

12. Digitaler Funkkommunikationsempfänger nach irgendeinem der Ansprüche 9 bis 11, wobei die Mehrzahl von statistischen Mustern wenigstens eine Gaußkurve und eine Summe aus wenigstens zwei Gaußkurven umfasst.

13. Digitaler Funkkommunikationsempfänger nach Anspruch 12, wobei für jede Gaußkurve des ausgewählten statistischen Musters die sich auf diese statistische Verteilung beziehender Parameter, die von den Mitteln zur Ermittlung sich auf diese statistische Verteilung beziehender Parameter ermittelt wurden, wenigstens ein Parameter unter einem Wert, um den diese Gaußkurve wesentlich zentriert ist, und einer Varianz umfassen.

14. Digitaler Funkkommunikationsempfänger nach irgendeinem der Ansprüche 9 bis 12, umfassend Mittel zur Gewinnung einer Information über eine Anzahl von zum Geräusch vorwiegend beitragenden Störsignalen, wobei die vorangehenden Mittel in Abhängigkeit vom Ergebnis einer Vergleich zwischen einer Anzahl von zum Geräusch vorwiegend beitragenden Störsignalen und einer vorbestimmter Anzahl selektiv ausgeführt werden.

15. Digitaler Funkkommunikationsempfänger nach Anspruch 14, wobei die vorangehenden Mittel ausgeführt werden, wenn die Anzahl von zum Geräusch vorwiegend beitragenden Störsignalen gleich oder niedriger als die vorbestimmte Anzahl ist, und ausserdem umfassend Mittel zur Berechnung eine Schätzung wenigstens eines vom empfangenen Signal getragenen Symbols, mit der Annahme dass das Geräusch ein gaußsches weißes Rauschen ist, wenn die Anzahl von zum Geräusch vorwiegend beitragenden Störsignalen streng größer ist als die vorbestimmte Anzahl.

16. Digitaler Funkkommunikationsempfänger nach Anspruch 14 oder 15, wobei die vorbestimmte Anzahl gleich 1 ist.

17. Computerprogrammprodukt zur Einsetzung in einem digitalen Funkkommunikationsempfänger, mit Anweisungen um das Verfahren nachirgendeinem der Ansprüche 1 bis 8 anzuwenden, bei einer Ausführung des Programms über Mittel des digitalen Funkkommunikationsempfängers.

EP 1 592 149 B1

# FIG. 1

$S(t)$

| 1 | 2 | 3 | 4 | 5 |
|---|---|---|---|---|
| ÉTAGE RADIO | FILTRE ADAPTÉ | SONDAGE | ESTIMATION | DÉCISION |

$R(t)$ → G(R)

# FIG. 2

$C_p^*$

| 7 | 8 |
|---|---|
| FILTRE ADAPTÉ | SONDAGE |

$N_o$

| 15 |
|---|
| DÉCISION |

$\tau_i, E_i$

| 6 |
|---|
| ÉTAGE RADIO |

$y(t)$

| 9 | 10 |
|---|---|
| ESTIMATION | (.)* |

$A_i(n)$

$A_i^*(n)$

$W(n)$

| 14 |
|---|
| ESTIMATION |

$X(n)$

| 11 | 13 |
|---|---|
| DÉSÉTALEMENT | CUMUL |

$Z_i(n)$

$X_i(n)$

12

16

$C_k^*(t)$

FIG. 3

FIG. 4

FIG. 5

EP 1 592 149 B1

**EP 1 592 149 B1**

## RÉFÉRENCES CITÉES DANS LA DESCRIPTION

**Documents brevets cités dans la description**

- FR 2796229 A